# EUROPÄISCHE PATENTSCHRIFT

(11) **EP 1 352 318 B1**
(45) Veröffentlichungstag und Bekanntmachung des Hinweises auf die Patenterteilung: **14.03.2007**
(21) Anmeldenummer: 02701190.7
(22) Anmeldetag: 15.01.2002
(51) Int. Cl.: G06F 9/30

(54) **MIKROPROZESSORSCHALTUNG FÜR TRAGBARE DATENTRÄGER**
MICROPROCESSOR CIRCUIT FOR PORTABLE DATA CARRIERS
CIRCUIT INTEGRE A MICROPROCESSEUR POUR SUPPORT DE DONNEES PORTATIF

(30) Priorität: 18.01.2001 DE 10102202
(43) Veröffentlichungstag der Anmeldung: 15.10.2003
(73) Patentinhaber: Infineon Technologies AG, 81669 München (DE)
(72) Erfinder: MAY, Christian, 81677 München (DE); SEDLAK, Holger, 82054 Sauerlach-Lochhofen (DE)
(74) Vertreter: Epping - Hermann - Fischer
(86) Internationale Anmeldenummer: PCT/DE2002/000093
(87) Internationale Veröffentlichungsnummer: WO 2002/057906

(56) Entgegenhaltungen:
- EP-A- 0 955 583
- US-A- 5 802 339
- US-A- 5 881 265
- US-A- 5 944 810
- US-A- 6 085 275
- US-B1- 6 199 156

## Beschreibung

Die Erfindung betrifft eine Mikroprozessorschaltung für tragbare Datenträger gemäß dem Oberbegriff des Anspruchs 1.

Mikroprozessorschaltungen der genannten Art finden bevorzugt Anwendung in sogenannten Chipkarten, d.h. Ausweiskarten, Kreditkarten, Buchungskarten und dergleichen, die mit einem integrierten Schaltkreis ausgestattet sind. Die Mikroprozessorschaltungen sind aber auch in sog. Zahlungsverkehrsmodulen einsetzbar, die mit den oben genannten Karten über entsprechende Schnittstellen kommunizieren.

Einer der wesentlichen Vorteile einer solchen Karte besteht in der vielfältigen Verwendungsmöglichkeit seitens des Karteninhabers. Der im integrierten Schaltkreis enthaltene Mikroprozessor und die dazu gehörigen Speichermittel erlauben eine umfangreiche Datenverarbeitung in der Karte selbst, wohingegen die beispielsweise mit Magnetstreifen versehenen Karten es erforderlich machen, sämtliche Datenverarbeitungsvorgänge extern durchzuführen.

Der Kartenhersteller kann den Mikroprozessor mit einem fest gespeicherten Betriebssystem ausstatten, welches grundlegende Funktionen übernimmt, beispielsweise Prozeduren zum Vergleichen eines extern eingegebenen Codes mit gespeichertem Code und dergleichen. Die zu dem Mikroprozessor gehörigen Speicher dienen außer zur Abspeicherung des Betriebssystems auch zum Abspeichern bestimmter Anwendungen, welche aus mehreren Funktionen bestehen kann und Parametern, die z.B. zur Sicherheitsüberprüfung notwendig sind und auf jeden Fall geheim gehalten werden müssen.

Eine vielseitige Anwendung der Karten erreicht man dann, wenn man von einem Betriebssystem mit zugehörigen Programmen ausgeht, gewisse Schnittstellen definiert und einen Speicher oder Speicherbereich für ein Fremdprogramm reserviert. Der Kartenhersteller stellt dann für die Anwender, d.h. für die Karten ausgebende Organisation, einen Speicher bzw. Speicherbereich zur Einprogrammierung ihres Fremdprogramms zur Verfügung. In diesem Fremdprogramm kann die Organisation dann spezifische Operationen festlegen, die unabhängig vom Betriebssystem sind und die lediglich die spezielle Organisation betreffen.

Die Mikroprozessorschaltungen der genannten Art verfügen dabei über mindestens eine Registerbank, die der aktuell ausgeführten Funktion, dem sog. Kontext, zur Verfügung steht. Bei einem Funktionsaufruf einer zweiten Funktion aus einer ersten Funktion müssen dabei die Register, die mit Daten der ersten Funktion belegt sind, auf einem Zwischenspeicher, einem Stack, gespeichert werden. In der aufgerufenen, zweiten Funktion stehen diese Register dann der zweiten Funktion zum Beschreiben zur Verfügung. Bei der Rückkehr von der zweiten Funktion zu der ersten Funktion müssen die auf dem Stack zwischengespeicherten Daten wieder in das Register geschrieben werden.

Das Speichern bzw. Lesen der Register auf den Stack bzw. von dem Stack durch entsprechende Schreib-/Lese-Operationen für die einzelnen Register erfordert eine verhältnismäßig hohe Anzahl von Instruktionen, die zu einer signifikanten Vergrößerung des Programmcodes führen. Weiterhin besteht das Problem, daß bei einem Funktionswechsel bzw. Funktionsaufruf die zu der ersten Funktion gehörenden Daten in dem Register durch die zweite Funktion noch lesbar sind. Dies kann beispielsweise bei Kreditkarten ein Sicherheitsproblem darstellen. Die zweite Funktion könnte nämlich gegebenenfalls noch geheime Daten in den Registern lesen, die an sich nur der ersten Funktion bekannt sein sollten.

Aus dem Stand der Technik ist eine Instruktion bekannt, mit der einzelne Register einer Registerbank ausgewählt werden können, die dann auf dem Stack gespeichert werden sollen. Die Instruktion "ST REGMASK [Bitmaske] [SP]" ist in der Lage mittels der Bitmaske lediglich die einen Inhalt aufweisenden Register einer Registerbank auszuwählen und auf dem Stack abzuspeichern. Weiterhin beinhaltet diese Instruktion einen "Stack Pointer SP", der auf die nächste freie Adresse des Stacks weist. Die Information, welche Register mit einem Datum belegt sind, werden vom Compiler, d. h. von der CPU, festgelegt. Aus diesen Informationen wird die Bitmaske kreiert. Beim Rücklesen der Daten vom Stack in die Register ist der Compiler in der Lage, festzustellen, welche Register ursprünglich belegt waren. Die Daten werden entsprechend dieser Information der Bitmaske, in die richtigen Register rückgespeichert.

Mittels einer einzigen Instruktion können die beschriebenen Register im Stack abgespeichert werden. Beim Aufruf der Instruktion ST REGMASK [Bitmaske] [SP] werden die Register unmittelbar auf den Stack geschrieben. Allerdings wird zur Ausführung der gesamten Instruktion eine Mehrzahl an Takten benötigt. Erst anschließend kann eine zweite Funktion aufgerufen werden, der dann die Register an der Registerbank zur Verfügung stehen. Nachteilig ist ferner, daß der Stack einen Teilbereich des Speichers darstellt, welcher für die Programmierer und somit auch für alle anderen Programme bzw. Funktionen zugänglich ist. Ein Ausspionieren dieser Daten ist deshalb möglich.

Aus der EP 0 995 583 A2 ist eine Datenverarbeitungsanordnung bekannt, mit deren Hilfe ein effizienter Kontextwechsel in Prozessoren mit sehr großen Registerdateien ermöglicht wird. Jedes Register wird dazu mit Bits versehen, welche angeben, ob die im Register gespeicherten Daten durch einen Kontextwechsel verändert wurden. Um die Effizienz zu erhöhen, werden nur solche Register abgespeichert, die verändert wurden. Weiterhin bekannt ist die Verwendung von sog. "Registerfenstern", wobei einer Funktion ein Registerfenster zur Verfügung steht. Wird eine zweite Funktion aufgerufen, so wird über die Veränderung eines "Registerpointers" ein weiteres Registerfenster ausgewählt. Dieses steht dann der zweiten Funktion zum Beschreiben zur Verfügung. Die Registerbank kann dabei eine Mehrzahl an Registerfenstern aufweisen. Sobald das letzte, unbeschriebene Registerfenster von einer Funktion aufgerufen und beschrieben wird, können die Register eines oder mehrerer Registerfenster zeitgleich auf einem Stack zwischengespeichert werden. Somit ist das gleichzeitige Beschreiben eines Registers für die derzeit aktuelle Funktion sowie das Speichern der Registerinhalte einer vorher aktiven Funktion möglich. Es handelt sich deshalb um eine besonders zeitsparende Variante. Nachteilig ist jedoch, daß alle Register eines Registerfensters, unabhängig davon, ob die Register ein Datum aufweisen oder nicht, auf den Stack geschrieben werden.

Der Erfindung liegt deshalb die Aufgabe zugrunde, eine Schaltung sowie ein Verfahren anzugeben, die bzw. das mit einfachen Maßnahmen sicherstellt, daß die Registerinhalte einer Funktion nicht für eine andere Funktion zugänglich sind.

Diese Aufgabe wird erfindungsgemäß durch die in den Ansprüchen 1 und 8 angegebenen Merkmale jeweils gelöst.

Erfindungsgemäß weist die Mikroprozessorschaltung ein Hilfsregister auf, das eine Anzahl an Bits speichert, wobei jedes der Bits einem der Register der Registerbank zugeordnet ist. Ein Register kann nur dann gelesen werden, wenn das zugeordnete Bit des Hilfsregisters einen zweiten Wert aufweist. Wenn das zugeordnete Bit des Hilfsregisters dagegen einen ersten Wert aufweist, wird unabhängig von dem im Register gespeicherten Wert ein definierter Wert zurückgegeben.

Durch das Zuordnen je eines Bits zu einem Register der Registerbank kann auf einfache Weise zwischen beschriebenen und nicht beschriebenen Registern unterschieden werden. Somit ist es möglich, beim Speichern der Registerinhalte auf einem Stack lediglich diejenigen Register abzuspeichern, die tatsächlich ein Datum aufweisen.

Dadurch, daß die ein Datum aufweisendes Register nicht durch einen Compiler ermittelt werden müssen, kann das Abspeichern der Register schnell, energieeffizient und mit geringem Programmcode, nämlich einem einzigen Befehl, erfolgen.

In einer ersten Ausführungsform kann das Hilfsregister eine der Anzahl der Register der Registerbank entsprechende Anzahl an weiteren Registern aufweisen, wobei jedes dieser weiteren Register zur Speicherung eines einzigen Bits vorgesehen ist. Das Hilfsregister stellt somit ebenfalls eine Registerbank dar.

Gemäß einer zweiten Ausführungsform weist das Hilfsregister genau ein weiteres Register auf, wobei das weitere Register zur Speicherung einer Bitfolge vorgesehen ist, die der Anzahl der Register der Registerbank entspricht. Vorzugsweise ist das Hilfsregister ein Register der Registerbank. In dieser zweiten Ausführungsform ist somit eine Abänderung einer an sich bekannten Mikroprozessorschaltung nicht notwendig, da das Hilfsregister in einem Register der Registerbank abgespeichert wird. Vorzugsweise wird das unterste oder oberste Register hierfür verwendet.

In einer bevorzugten Ausgestaltung der Mikroprozessorschaltung ist ein vom Programmierer nicht verwaltbarer weiterer Stack vorgesehen zur Speicherung der in der Registerbank enthaltenen Daten. Dieser weitere Stack ist als sog. "Context Safe Area" bekannt. Dieser ist ein Hardware-interner Stack, der Teil des Speichers sein kann. Daten die in diesem weite ren Stack abgelegt werden, können nicht über eine in dem Speicher abgelegte Software abgefragt oder beschrieben werden. Die Verwaltung dieses weiteren Stacks unterliegt allein dem Betriebssystem. Eine Manipulation dieser Daten ist deshalb nicht möglich.

Vorzugsweise weist die Registerbank einen ersten und zweiten Bereich mit ersten und zweiten Registern auf, wobei zumindest den ersten Registern jeweils ein Bit in dem Hilfsregister zugeordnet ist. Die Aufteilung einer Registerbank in einen ersten (Upper Context) und einen zweiten Bereich (Lower Context) resultiert daraus, daß bei einem Funktionsaufruf häufig Parameter einer ersten Funktion der zweiten Funktion übergeben werden. Diese Parameter werden in den Registern des zweiten Bereichs (Lower Context) abgelegt. Aus diesem zweiten Bereich holt sich dann die zweite, aufgerufene Funktion die Parameter zur weiteren Verarbeitung ab. Der erste Bereich der Registerbank (Upper Context) wird hingegen lediglich von der zweiten, aufgerufenen Funktion verwendet und beschrieben. Sollte von der zweiten Funktion eine dritte Funktion aufgerufen werden, so ist es ausreichend, lediglich die Register des ersten Bereiches der Registerbank auf dem Stack abzulegen. Die Übergabeparameter in den Registern des zweiten Bereichs können hingegen überschrieben oder gegebenenfalls gar von der dritten Funktion ausgelesen werden.

Selbstverständlich ist auch denkbar, auch die Register des zweiten Bereiches dem Hilfsregister zuzuordnen, so daß bei einem Funktionsaufruf und Funktionswechsel alle Register der Registerbank d.h. die des ersten und des zweiten Bereiches, auf dem Stack abgelegt würden.

In einer weiteren Ausgestaltung der Erfindung ist der erste Bereich der Registerbank in mehrere Teilbereiche aufteilbar, die jeweils einer der Funktionen zur Verfügung stehen. Diese Aufteilung in mehrere Teilbereiche entspricht den eingangs genannten Registerfenstern. Sofern der erste Bereich der Registerbank eine ausreichend hohe Anzahl an Registern aufweist, eröffnet diese Variante ein äußerst energieeffizientes, schnelles Vorgehen, was insbesondere bei Mikroprozessorschaltungen in tragbaren Datenträgern von großem Vorteil ist.

Beim erfindungsgemäßen Verfahren zum Betreiben der oben beschriebenen Mikroprozessorschaltung werden beim Initialisieren der Mikroprozessorschaltung alle Bits des Hilfsregisters auf einen ersten Wert gesetzt. Beim Schreiben eines Datums in ein Register der Registerbank wird dann das zugeordnete Bit des Hilfsregisters auf einen zweiten Wert gesetzt. Beim Lesen eines Datums aus einem der Register der Registerbank, ist ein Lesen nur möglich, wenn das zugeordnete Bit des Hilfsregisters den zweiten Wert aufweist. Wenn dagegen das zugeordnete Bit des Hilfsregisters den ersten Wert aufweist, wird ein definierter Wert zurückgegeben.

Das Initialisieren der Mikroprozessorschaltung findet beim Aktivieren statt, so daß sichergestellt ist, daß alle Register und alle Bits des Hilfsregisters in einem definierten, bekannten Zustand sich befinden. Beim Schreiben eines Datums wird automatisch das jeweilige Bit auf den zweiten Wert gesetzt, um hierdurch anzuzeigen, daß dieses Register einen Wert aufweist. Der erste Wert des Bits des Hilfsregisters kann beispielsweise 0 sein, während der zweite Wert der Bits des Hilfsregisters 1 sein kann. Selbstverständlich ist auch eine umgekehrte Zuordnung möglich.Das Lesen eines Datums aus einem der Register der Registerbank ist nur dann möglich, wenn das zugeordnete Bit des Hilfsregisters den zweiten Wert aufweist. Dies bedeutet, lediglich dann wenn das zugeordnete Bit des Registers den zweiten Wert, z.B. 1, aufweist, wird das tatsächlich in dem Register abgespeicherte Datum ausgelesen. Würde das zugeordnete Bit in dem Hilfsregister hingegen den ersten Wert aufweisen, so würde ein evtl. in dem Register befindliches Datum nicht an den Mikroprozessor zurückgegeben, sondern statt dessen ein definierter Wert, z.B. 0.

Hieraus ergibt sich, daß zum Löschen eines Registers nicht das Register selbst gelöscht werden braucht, sondern daß es ausreichend ist, das zugeordnete Bit im Hilfsregister auf den ersten Wert zu setzen. Bereits dann ist ein Auslesen des tatsächlichen Datums in dem Hilfsregister nicht mehr möglich. Das Löschen mehrerer Register kann somit auf einfache, schnelle und stromsparende Art und Weise erfolgen.

In einer Weiterbildung des erfindungsgemäßen Verfahrens werden beim Wechsel einer ersten Funktion zu einer zweiten Funktion die zu der ersten Funktion gehörenden Daten in Registern der Registerbank und die Bitfolge des Hilfsregisters aufeinander folgend in dem Stack oder in dem weiteren Stack abgespeichert. Mit anderen Worten heißt dies, daß nicht alle Register der Registerbank auf dem Stack abgespeichert werden, sondern lediglich diejenigen Register, die in dem Hilfsregister ein Bit mit dem zweiten Wert aufweisen. Zusätzlich zu den Daten der Register wird ebenfalls die Bitfolge des Hilfsregisters auf dem Stack abgespeichert, um bei einem Rücksprung die Daten in die korrekten Register zurückspeichern zu können.

Es ist weiterhin vorteilhaft, wenn nach dem Abspeichern der Daten und der Bitfolge des Hilfsregisters in dem Stack oder in dem weiteren Stack die Bits des Hilfsregisters auf den ersten Wert gesetzt werden. Dies entspricht dem oben erläuterten Löschen des Registers. Tatsächlich sind somit nicht die Register selbst gelöscht worden, sondern lediglich die Bits des zugehörigen Hilfsregisters.

Die Erfindung und deren Vorteile werden anhand der nachfolgenden Figuren näher erläutert.

Es zeigen:
- Figur 1: einen schematischen Aufbau der erfindungsgemäßen Mikroprozessorschaltung,
- Figur 2: ein erstes Ausführungsbeispiel eines Registers und eines zugeordneten Hilfsregisters,
- Figur 3a, 3b: ein zweites Ausführungsbeispiel, bei dem das Hilfsregister Bestandteil des Registers ist,
- Figur 4: ein erstes Ausführungsbeispiel, in dem das Prinzip des Abspeicherns der Register auf den Stack gezeigt ist,
- Figur 5: ein zweites Ausführungsbeispiel, in dem das Abspeichern der Register auf den Stack gezeigt ist,
- Figur 6a, 6b: ein Register und dessen zugeordnetes Hilfsregister, wobei das Register in einen ersten und in einen zweiten Bereich unterteilt ist und
- Figur 7: ein weiteres Ausführungsbeispiel, bei dem das Register als Registerfenster realisiert ist.

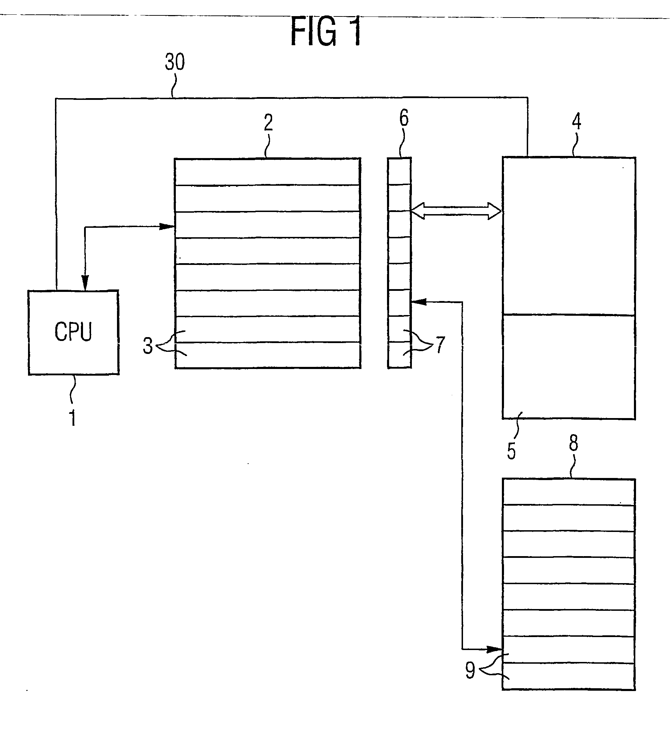

Der schematische Aufbau der erfindungsgemäßen Mikroprozessorschaltung ist in Figur 1 dargestellt. Weil der Aufbau derartiger Mikroprozessorschaltungen grundsätzlich bekannt ist, soll dieser hier nicht im Detail erläutert werden. Die Darstellung beschränkt sich deshalb auch auf die für die Erfindung notwendigen Komponenten.

Die Mikroprozessorschaltung enthält eine Steuereinheit 1, die über eine Steuerleitung 30 mit einem Speicher 4 verbunden ist, eine Registerbank 2, ein Hilfsregister 6 und einen Hardware-internen Stack 8, der im weiteren als weiterer Stack bezeichnet wird. Der Speicher 4 kann in verschiedene Bereiche aufgeteilt sind. Beispielsweise kann dieser einen Schreib/Lesespeicher (RAM), einen Festspeicher (ROM) und EEPROM beinhalten. Teile dieser genannten Speicherbereiche gehören zu dem Betriebssystem, welches z.T. sicherheitsrelevante Daten enthält, die geheim gehalten werden müssen. Weiterhin beinhaltet der Speicher 4 einen Stack 5, der einen schnell zugreifbaren Zwischenspeicher darstellt. Dieser ist von allen im Speicher 4 befindlichen Programmen nutzbar. Dies bedeutet, der Stack 5 ist für jede Funktion der Programme öffentlich zugänglich.

Die Registerbank 2 weist im vorliegenden Beispiel acht Register 3 auf, wobei in jedem Register 3 genau ein Datum gespeichert werden kann. Jedem Register 3 ist ein weiteres Register 7 eines Hilfsregisters 6 zugeordnet. In jedem der weiteren Register 7 wird genau ein Bit abgespeichert, das eine Information darüber enthält, ob in dem zugeordneten Register 3 ein Datum abgespeichert ist oder nicht.

Der weitere Stack 8, in dem vorzugsweise die in den Registern 3 abgespeicherten Daten bei einem Funktionswechsel abgespeichert werden, ist ein sog. Hardware-interner Stack. Dies bedeutet, daß dieser nicht für Programme, die im Speicher 4 abgelegt sind, zugänglich sind. Somit kann ein Programmierer nicht auf diesen Speicherbereich zugreifen. Die Verwaltung obliegt vielmehr dem Betriebssystem. Obwohl der weitere Stack 8 in Figur 1 abgesetzt von dem Speicher 4 dargestellt ist, kann der weitere Stack 8 selbstverständlich Bestandteil des Speichers 4 sein.

Die Darstellung des Registers 2 und des Hilfsregisters 6 in Figur 1 wurde lediglich gewählt, um die Zuordnung der Register 3 und der weiteren Register 7 erläutern zu können. Wie aus der weiteren Beschreibung ersichtlich werden wird, braucht das Hilfsregister 6 nicht notwendigerweise ein von der Registerbank 2 unterschiedliches Register sein.

In dieser und in den folgenden Ausführungen wird exemplarisch davon ausgegangen, daß bei einem logischen Wert "1" in dem weiteren Register 7 in dem zugeordneten Register 3 der Registerbank 2 ein gültiges Datum geschrieben wurde.

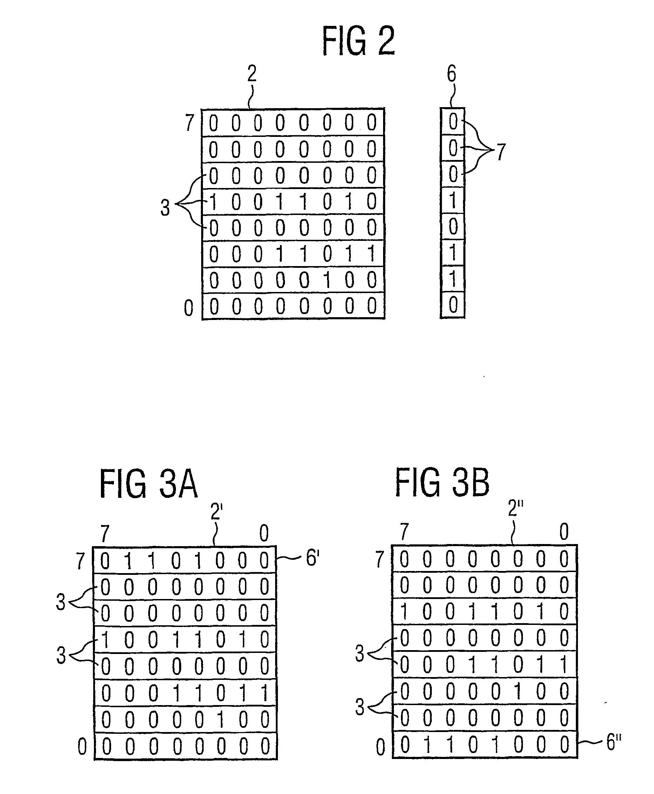

Die Figuren 2 und 3 zeigen zwei mögliche Ausführungsformen der Zuordnung der Registerbank 2 und des Hilfsregisters 6.

In der Figur 2 sind die Registerbank 2 und das Hilfsregister 6 voneinander getrennte Registerbanken. Die Anzahl der jeweiligen Register 3,7 ist identisch. Während in einem Register 3 der Registerbank 2 je nach Ausführungsform eine beliebige Anzahl an Bits gespeichert werden kann, ist ein weiteres Register 7 des Hilfsregisters 6 lediglich in der Lage, jeweils ein Bit abzuspeichern.

Sind die Register, wie in den vorliegenden Ausführungsbeispielen von unten nach oben fortlaufend von 0 bis 7 numeriert, so ist aus Figur 2 ersichtlich, daß die Register 1, 2 und 4 ein gültiges Datum aufweisen. Die jeweils korrespondierenden weiteren Register 7 enthalten deshalb eine logische "1". Die übrigen Register hingegen wurden nicht mit einem Datum beschrieben, so daß das zugeordnete Bit einen logischen Wert "0" aufweist.

In den Figuren 3a und 3b ist eine Hardwareänderung nicht notwendig, da das erfindungsgemäße Hilfsregister in einem Register 3 der Registerbank 2 gespeichert wird. Dies hat zur Folge, daß bei insgesamt 8 Registern lediglich 7 zum Beschreiben für die gerade ausgeführte Funktion zur Verfügung stehen. In der Figur 3a ist das Hilfsregister 6' im Register 7 abgelegt. In der Figur 3b ist das Hilfsregister 6" im Register 0 gespeichert. Das höchste Bit des Hilfsregisters 6', 6" korrespondiert dabei beispielsweise mit dem niedrigsten Register, hier: Register 0.

Im vorliegenden Ausführungsbeispiel kann in einem Register 3 der Registerbank 2 ein Datum mit 8 Bit Wortlänge gespeichert werden. Dabei ist das niederste Bit 0 des Hilfsregisters 6', 6" keinem Register zugeordnet. Alternativ könnte auch das oberste Bit 7 keinem der Register zugeordnet sein, so daß die Bits 0 bis 6 zur Zuordnung zu jeweiligen Registern 3 der Registerbank 2' verwendet würden. Gleichfalls könnte das oberste Bit des Hilfsregisters 6' dem obersten Register 3 der Registerbank zugeordnet sein, während das unterste Bit dem Register 0 zugeordnet sein könnte. In der Figur 3b ist eine Registerbank 2" gezeigt, bei der das Hilfsregister 6" im Register 0 gelegen ist. Die oben genannten Abwandlungen könnten ebenfalls zur Anwendung kommen.

Die Funktionsweise beim Schreiben und Lesen eines Datums in ein Register der Registerbank ist wie folgt. Sobald ein Datum in ein Register 3 der Registerbank 2 geschrieben wird, wird das korrespondierende Bit des Hilfsregisters 6, 6', 6" auf den zweiten Wert, in allen gezeigten Ausführungsbeispielen logisch "1", gesetzt. Zum Lesen eines Datums aus einem Register 3 wird zunächst das zugehörige Bit des Hilfsregisters überprüft. Enthält dieses den ersten Wert (logisch "0"), so wird - unabhängig davon, ob in dem zugeordneten Register 3 ein Datum steht oder nicht - der Wert 0 zurückgegeben. Nur dann, wenn das zugehörige Bit des abgefragten Registers 3 den zweiten Wert (logisch "1") enthält, wird das in diesem Register stehende Datum ausgelesen. Hieraus ergibt sich, daß zum Initialisieren oder Löschen eines Registers lediglich die Bits des Hilfsregisters auf den ersten Wert (logisch"0") gesetzt werden müssen. Bereits hierdurch ist sichergestellt, daß kein in einem Register 3 befindliches Datum ausgelesen werden kann.

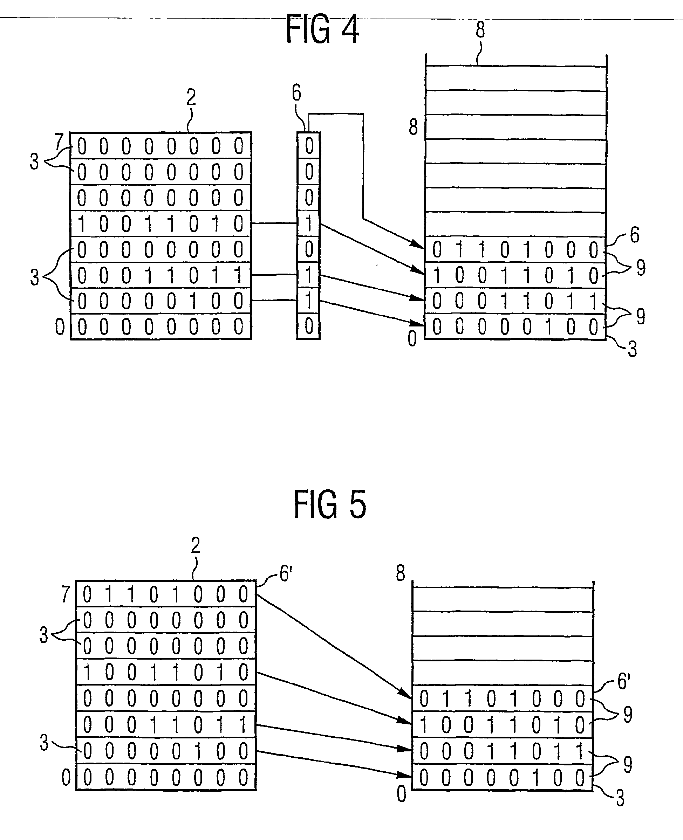

Wie bereits beschrieben, ist es beim Aufruf einer zweiten Funktion aus einer ersten Funktion notwendig, die in den Registern 3 befindlichen Daten auf einem Stack zwischenzuspeichern. Die nachfolgenden Figuren 4 bis 7 zeigen verschiedene Ausführungsformen, auf welche Weise dies bewerkstelligt werden kann.

Figur 4 zeigt die aus der Figur 2 bekannte Anordnung der Registerbank 2 und des zugeordneten, separaten Hilfsregisters 6. Beim Aufruf der zweiten Funktion, z.B. mittels des Befehls CALL [Funktion 2], werden diejenigen Register 3 der Registerbank vorzugsweise auf dem weiteren Stack 8 abgespeichert, deren zugeordnete Bits den zweiten Wert (logisch"1") aufweisen. Sofern sich, wie in Figur 4 gezeigt, zwischen zwei Daten aufweisenden Registern 3 ein Register ohne Daten befindet, wird dieses beim Schreiben auf den Stack 8 übergangen. Dies hat zur Folge, daß lediglich diejenigen Register, die Daten beinhalten aufeinanderfolgend auf dem Stack 8 abgespeichert werden. Zusätzlich zu den Registerinhalten wird die Bitfolge des Hilfsregisters 6 in einer Wortzeile des weiteren Stacks 8 abgelegt. Vorzugsweise wird die Bitfolge des Hilfsregisters 6 dabei als letzter Wert abgespeichert. Hierdurch ist bei einem Rücksprung von der Funktion 2 zu der ersten Funktion ein Rückschreiben der Registerinhalte aus dem Stack 8 in die Registerbank 2 möglich, wobei die jeweiligen Inhalte genau in dem Register abgelegt werden, in dem sie vorher geschrieben wurden.

Figur 5 unterscheidet sich von Figur 4 lediglich dadurch, daß das Hilfsregister 6' in einem Register der Registerbank 2 gelegen ist. In dem vorliegenden Ausführungsbeispiel wird dabei das Register 7 benutzt. Die Vorgehensweise entspricht ansonsten der zu Figur 4 beschriebenen Vorgehensweise.

Oftmals ist es üblich, eine Registerbank 2 in einen ersten Bereich 10 und in einen zweiten Bereich 20 aufzuteilen. In dem zweiten Bereich 20 werden dabei diejenigen Daten geschrieben, die sowohl die aufrufende (erste Funktion) als auch die aufgerufene Funktion (zweite Funktion) benötigen. Dies sind die Übergabeparameter. Der erste Bereich 10 wird lediglich von der aufgerufenen Funktion verwendet, um dort Daten zwischenzuspeichern.

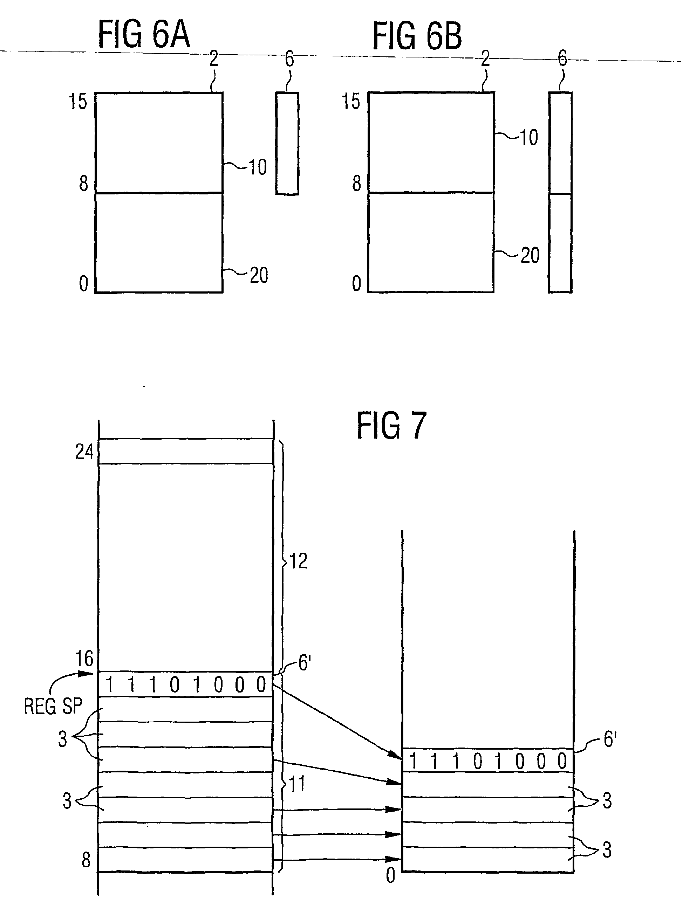

Es ist ausreichend, lediglich die Register des ersten Bereiches 10 auf dem weiteren Stack 8 zwischenzuspeichern. Aus diesem Grund ist, wie in Figur 6a gezeigt, lediglich dem ersten Bereich 10 ein Hilfsregister 6 zugeordnet.

Alternativ kann auch, wie dies Figur 6b zeigt, sowohl dem ersten als auch dem zweiten Bereich 10, 20 der Registerbank 2 ein Hilfsregister 6 zugeordnet sein. In diesem Fall werden auch die Übergabeparameter beim Aufruf einer Funktion auf dem Stack zwischengespeichert.

Figur 7 zeigt die Aufteilung der Registerbank 2 in mehrere Registerfenster 11, 12. Obwohl die Figur 7 lediglich zwei Registerfenster 11, 12 zeigt, kann die Registerbank eine beliebige Anzahl an Registerfenstern aufweisen. Die Registerfenster sind alle in dem ersten Bereich 10 gelegen, sofern die Registerbank in einen ersten und zweiten Bereich aufgeteilt ist.

Für eine gerade ausgeführte Funktion steht genau ein Registerfenster zur Verfügung. Dieses wird mittels eines "Stackpointers REG SP" ausgewählt. Die einem Registerfenster zugewiesenen Register können dann durch die Funktion beschrieben werden. Im jeweils obersten Register eines Registerfensters ist das Hilfsregister 6, 6' abgespeichert.

Die Verwendung von Registerfenstern ist insbesondere dann vorteilhaft, wenn häufige Funktionswechsel vorgenommen werden. Dieses Vorgehen ermöglicht, daß nicht bei jedem Funktionswechsel die beschriebenen Register in einem Stack abgelegt werden müssen.

Im vorliegenden Beispiel sei das Registerfenster 11 bereits durch eine erste Funktion belegt bzw. beschrieben. Die erste Funktion ruft eine zweite Funktion auf, wodurch der Stackpointer auf das nächste Registerfenster 12 deutet (REG SP). Durch den Funktionsaufruf wird im Unterschied zu den bisherigen Ausführungsbeispielen nicht die Registerliste auf dem Stack gespeichert, sondern lediglich der Stackpointer verschoben. Die zweite Funktion kann somit das Registerfenster 12 (Register 16 bis 23) nutzen, wobei im Register 23 das Hilfsregister gespeichert wird. Beim Aufruf einer dritten Funktion könnte dieses ein drittes Registerfenster (nicht dargestellt) nutzen. Währenddessen kann zeitgleich das zuerst beschriebene Registerfenster auf einen Stack geschrieben werden. Im vorliegenden Ausführungsbeispiel wäre dies das Registerfenster 11. Das Abspeichern der einzelnen Register erfolgt wie in den Figuren 4 bzw. 5 beschrieben.

Mittels einer derartigen Vorgehensweise wird ein äußerst schnelles, energieeffizientes und sicheres Speichern der in einer Registerbank abgelegten Registerinhalte möglich.

Das in der Figur 7 gezeigt Ausführungsbeispiel weist hierbei Registerfenster mit einer identischen Anzahl an Registern auf. Dies ist nicht zwangsläufig notwendig. Die Größe des Registerfensters kann an die von der jeweiligen Funktion benötigen Register angepaßt werden. Hierbei würde jedoch grundsätzlich eines der Register eines Registerfensters zum Abspeichern der Bitfolge des Hilfsregisters verwendet werden.

Bezugszeichenliste
- 1: Steuereinheit
- 2,: 2', 2" Registerbank
- 3: Register
- 4: Speicher
- 5: Stack
- 6,: 6', 6" Hilfsregister
- 7: Register
- 8: Stack
- 9: Wortzeile
- 10: erster Bereich der Registerbank
- 11: erstes Registerfenster
- 12: zweites Registerfenster
- 20: zweiter Bereich der Registerbank
- 30: Steuerleitung
- SP: Stackpointer
- REG SP: Register Stackpointer

## Patentansprüche

1. Mikroprozessorschaltung mit wenigstens einer Steuereinheit (1), zumindest einem Speicher (4) zur freien Programmierung mit zumindest einem Funktionen aufweisenden Programm, einem Stack (5) zum Zwischenspeichern von Daten, einer zumindest ein Register (3) aufweisenden Registerbank (2) und einem Hilfsregister (6), das eine Anzahl an Bits speichert, wobei jedes der Bits einem der Register (3) der Registerbank (2) zugeordnet ist,
**dadurch gekennzeichnet, dass** zum Lesen eines Datums aus einem Register (3)
- das Register (3) nur dann gelesen werden kann, wenn das zugeordnete Bit des Hilfsregisters (6) einen zweiten Wert aufweist, und
- unabhängig von dem in dem Register (3) gespeicherten Wert ein definierter Wert zurückgegeben wird, wenn das zugeordnete Bit des Hilfsregisters (6) einen ersten Wert aufweist.

2. Mikroprozessorschaltung nach Anspruch 1
**dadurch gekennzeichnet, dass**
das Hilfsregister (6) eine der Anzahl der Register (3) der Registerbank (2) entsprechende Anzahl an weiteren Registern (7) aufweist, wobei jedes dieser weiteren Register (7) zur Speicherung eines einzigen Bits vorgesehen ist.

3. Mikroprozessorschaltung nach Anspruch 1,
**dadurch gekennzeichnet, dass**
das Hilfsregister (6) genau ein weiteres Register aufweist, wobei das weitere Register zur Speicherung einer Bitfolge vorgesehen ist, die der Anzahl der Register (3) der Registerbank (2) entspricht.

4. Mikroprozessorschaltung nach Anspruch 3,
**dadurch gekennzeichnet, dass**
das Hilfsregister (6) ein Register (3) der Registerbank (2) ist.

5. Mikroprozessorschaltung nach einem der Ansprüche 1 bis 4,
**dadurch gekennzeichnet, daß**
ein vom Programmierer nicht verwaltbarer weiterer Stack (9) vorgesehen ist zur Speicherung der in der Registerbank enthaltenen Daten.

6. Mikroprozessorschaltung nach einem der Ansprüche 1 bis 5,
**dadurch gekennzeichnet, dass**
die Registerbank (2) einen ersten und einen zweiten Bereich (10, 20) mit ersten und zweiten Registern aufweist, wobei zumindest den ersten Registern ein Bit in dem Hilfsregister (6) zugeordnet ist.

7. Mikroprozessorschaltung nach Anspruch 6,
**dadurch gekennzeichnet, dass**
der erste Bereich (10) der Registerbank (2) in mehrere Teilbereiche (11, 12) aufteilbar ist, die jeweils einer der Funktionen des Programmes zur Verfügung stehen.

8. Verfahren zum Betreiben einer Mikroprozessorschaltung nach einem der Ansprüche 1 bis 7,
**dadurch gekennzeichnet, dass**
- beim Initialisieren der Mikroprozessorschaltung alle Bits des Hilfsregisters (6) auf einen ersten Wert gesetzt werden,
- beim Schreiben eines Datums in ein Register (3) der Registerbank (2) das zugeordnete Bit des Hilfsregisters (6) auf einen zweiten Wert gesetzt wird, und
- beim Lesen eines Datums aus einem der Register (3) der Registerbank (2), ein Lesen nur möglich ist, wenn das zugeordnete Bit des Hilfsregisters (6) den zweiten Wert aufweist, und, wenn das zugeordnete Bit des Hilfsregisters (6) den ersten Wert aufweist, ein definierter Wert zurückgegeben wird.

9. Verfahren nach Anspruch 8,
**dadurch gekennzeichnet, dass**
zum Löschen eines Registers (3) das zugeordnete Bit des Hilfsregisters (6) auf den ersten Wert gesetzt wird.

10. Verfahren nach einem der Ansprüche 8 oder 9,
**dadurch gekennzeichnet, dass**
beim Wechsel einer ersten Funktion zu einer zweiten Funktion die zu der ersten Funktion gehörenden Daten in den Registern (3) der Registerbank (2) und die Bitfolge des Hilfsregisters (6) aufeinander folgend in dem Stack oder dem weiteren Stack abgespeichert werden.

11. Verfahren nach Anspruch 10,
**dadurch gekennzeichnet, dass**
nach dem Abspeichern der Daten und der Bitfolge des Hilfsregisters (6) in dem Stack oder in dem weiteren Stack die Bits des Hilfsregisters auf den ersten Wert gesetzt werden.

## Claims

1. Microprocessor circuit having at least one control unit (1), at least one memory (4) for free programming with at least one program having functions, a stack (5) for buffer-storing data, a register bank (2) having at least one register (3), and an auxiliary register (6) which stores a number of bits, each of the bits being assigned to one of the registers (3) of the register bank (2),
**characterized in that**, to read a datum from a register (3),
- the register (3) can only be read if the assigned bit of the auxiliary register (6) has a second value, and
- irrespective of the value stored in the register (3), a defined value is returned if the assigned bit of the auxiliary register (6) has a first value.

2. Microprocessor circuit according to Claim 1,
**characterized in that**
the auxiliary register (6) has a number of further registers (7) corresponding to the number of registers (3) of the register bank (2), each of these further registers (7) being provided for the storage of a single bit.

3. Microprocessor circuit according to Claim 1,
**characterized in that**
the auxiliary register (6) has exactly one further register, the further register being provided for the storage of a bit sequence which corresponds to the number of registers (3) of the register bank (2).

4. Microprocessor circuit according to Claim 3,
**characterized in that**
the auxiliary register (6) is a register (3) of the register bank (2).

5. Microprocessor circuit according to one of Claims 1 to 4,
**characterized in that**
a further stack (9) which cannot be managed by the programmer is provided for the storage of the data contained in the register bank.

6. Microprocessor circuit according to one of Claims 1 to 5,
**characterized in that**
the register bank (2) has a first and a second area (10, 20) with first and second registers, at least the first registers being assigned a bit in the auxiliary register (6).

7. Microprocessor circuit according to Claim 6,
**characterized in that**
the first area (10) of the register bank (2) can be divided into a plurality of sub-areas (11, 12) which are respectively available to one of the functions of the program.

8. Method for operating a microprocessor circuit according to one of Claims 1 to 7,
**characterized in that**
- when the microprocessor circuit is initialized, all the bits of the auxiliary register (6) are set to a first value,
- when a datum is written to a register (3) of the register bank (2), the assigned bit of the auxiliary register (6) is set to a second value, and
- in the event of the reading of a datum from one of the registers (3) of the register bank (2), a reading is only possible if the assigned bit of the auxiliary register (6) has the second value, and if the assigned bit of the auxiliary register (6) has the first value, a defined value is returned.

9. Method according to Claim 8,
**characterized in that**
to erase a register (3), the assigned bit of the auxiliary register (6) is set to the first value.

10. Method according to one of Claims 8 or 9,
**characterized in that**
in the event of a change from a first function to a second function, the data associated with the first function in the registers (3) of the register bank (2) and the bit sequence of the auxiliary register (6) are stored successively in the stack or the further stack.

11. Method according to Claim 10,
**characterized in that**
after the storage of the data and the bit sequence of the auxiliary register (6) in the stack or in the further stack, the bits of the auxiliary register are set to the first value.

## Revendications

1. Circuit à microprocesseur comportant au moins une unité de commande (1), au moins une mémoire (4) pour la programmation libre avec au moins un programme comportant des fonctions, une pile (5) pour la mémorisation temporaire de données, un banc de registres (2) comportant au moins un registre (3) et un registre auxiliaire (6) mémorisant un certain nombre de bits, chacun des bits étant associé à l'un des registres (3) du banc de registres (2),
**caractérisé par le fait que**, pour la lecture d'une donnée dans un registre (3),
- le registre (3) ne peut être lu que si le bit associé du registre auxiliaire (6) a une deuxième valeur, et
- indépendamment de la valeur mémorisée dans le registre (3), une valeur définie est renvoyée si le bit associé du registre auxiliaire (6) a une première valeur.

2. Circuit à microprocesseur selon la revendication 1,
**caractérisé par le fait que** le registre auxiliaire (6) comporte un nombre d'autres registres (7) qui correspond au nombre des registres (3) du banc de registres (2), chacun de ces autres registres (7) étant prévu pour la mémorisation d'un seul bit.

3. Circuit à microprocesseur selon la revendication 1,
**caractérisé par le fait que** le registre auxiliaire (6) comporte exactement un autre registre, l'autre registre étant prévu pour la mémorisation d'une séquence de bits qui correspond au nombre des registres (3) du banc de registres (2).

4. Circuit à microprocesseur selon la revendication 3,
**caractérisé par le fait que** le registre auxiliaire (6) est un registre (3) du banc de registres (2).

5. Circuit à microprocesseur selon l'une des revendications 1 à 4,
**caractérisé par le fait qu'**une autre pile (9) ne pouvant pas être gérée par le programmeur est prévue pour la mémorisation des données contenues dans le banc de registres.

6. Circuit à microprocesseur selon l'une des revendications 1 à 5,
**caractérisé par le fait que** le banc de registres (2) comporte une première et une deuxième zone (10, 20) avec des premiers et des deuxièmes registres, un bit dans le registre auxiliaire (6) étant associé au moins aux premiers registres.

7. Circuit à microprocesseur selon la revendication 6,
**caractérisé par le fait que** la première zone (10) du banc de registres (2) peut être divisée en plusieurs sous-zones (11, 12) qui sont chacune à la disposition de l'une des fonctions du programme.

8. Procédé pour l'exploitation d'un circuit à microprocesseur selon l'une des revendications 1 à 7,
**caractérisé par le fait que**
- lors de l'initialisation du circuit à microprocesseur, tous les bits du registre auxiliaire (6) sont mis à une première valeur,
- lors de l'écriture d'une donnée dans un registre (3) du banc de registres (2), le bit associé du registre auxiliaire (6) est mis à une deuxième valeur, et
- lors de la lecture d'une donnée dans l'un des registres (3) du banc de registres (2), une lecture n'est possible que si le bit associé du registre auxiliaire (6) a la deuxième valeur et, si le bit associé du registre auxiliaire (6) a la première valeur, une valeur définie est renvoyée.

9. Procédé selon la revendication 8,
**caractérisé par le fait que**, pour l'effacement d'un registre (3), le bit associé du registre auxiliaire (6) est mis à la première valeur.

10. Procédé selon l'une des revendications 8 ou 9,
**caractérisé par le fait que**, lors du changement d'une première fonction à une deuxième fonction, les données appartenant à la première fonction dans les registres (3) du banc de registres (2) et la séquence de bits du registre auxiliaire (6) sont mémorisées successivement dans la pile ou dans l'autre pile.

11. Procédé selon la revendication 10,
**caractérisé par le fait que**, après la mémorisation des données et de la séquence de bits du registre auxiliaire (6) dans la pile ou dans l'autre pile, les bits du registre auxiliaire sont mis à la première valeur.
